# EUROPEAN PATENT APPLICATION

(11) **EP 2 741 464 A1**
(43) Date of publication of application: **11.06.2014**
(21) Application number: 13194516.4
(22) Date of filing: 26.11.2013
(51) Int. Cl.: H04L 29/06

(54) **Management server, device, and method of synchronizing applications of the same**

(30) Priority: 05.12.2012 KR 20120140330
(71) Applicant: Samsung Electronics Co., Ltd, Gyeonggi-do 443-742 (KR)
(72) Inventor: Lee, Young-hwan, Seoul (KR); Mun, Kyoung-ran, Gyeonggi-do (KR); Song, Jun-hyeok, Gyeonggi-do (KR); Lee, Sang-kwon, Gyeonggi-do (KR)
(74) Representative: Taor, Simon Edward William

(57) **Abstract**

A management and market server, different kinds of devices, and methods to synchronize applications between the different kinds of devices is provided. A method for application synchronization by a management server configured to communicate with a plurality of devices includes receiving, from a first device, a first application list of at least one application installed in the first device at the management server, storing the first application list in the management server, receiving, from a second device, a request for application synchronization with the first device, determining whether the second device supports an application from the first application list, generating a second application list by excluding the application from the first application list in response to the application not being supported by the second device, and including the application in response to the application being supported by the second device, and transmitting the second application list to the second device.

## Description

Apparatuses and methods consistent with exemplary embodiments relate to application synchronization, more particularly to a management server that synchronizes applications between different kinds of devices, as well as a device and a method for synchronizing applications of the same.

With the advent of various digital devices including a smart TV, a tablet PC, and a cellular phone, applications installed on such devices have become diverse and extensive.

When a single user uses a plurality of digital devices, the user may be inconvenience by the need to iteratively install like applications on each device. Thus, in a smart environment a synchronization function, which enables synchronization of the applications installed on the devices, is provided, thereby avoiding such inconvenient and iterative installation.

However, applications installed on digital devices become diverse and are executed in different environments, and accordingly the devices may support different applications.

Accordingly, when applications on the devices are synchronized, regardless of whether the devices support the applications, useless applications may be installed on the devices, thereby wasting storage capacity and causing inconvenience for a user.

A display apparatus, such as a TV, may be connected with a set-back box as an extension device or an upgrade apparatus, which has various functions except for a display function of displaying an image and upgrades the display apparatus in terms of hardware or software. An application may be also installed on the set-back box and an existing smart TV, and the application may be synchronized in first connection for user convenience. In this case, it is needed to verify whether applications installed on the smart TV are supported by the set-back box and to install selective applications.

According to an aspect of an exemplary embodiment, there is provided a method for application synchronization by a management server capable of communicating with a plurality of devices including receiving, from a first device, a first application list of at least one application installed in the first device at the management server; storing the first application list in the management server; receiving, from a second device, a request for application synchronization with the first device; determining whether the second device supports an application from the first application list; generating a second application list by excluding the application from the first application list in response to the application not being supported by the second device, and including the application in response to the application being supported by the second device; and transmitting the second application list to the second device.

The method may further include authenticating the first device and authenticating the second device, and the first device and the second device may be authenticated based on a same user information.

The first application list may include a pre-installed application installed in the first device and a user installed application selectively installed by a user in the first device.

The storing the first application list may include comparing the first application list with an already stored application list of the first device and updating the already stored application list of the first device to the first application list based on a comparison result.

The application synchronization method may further include determining whether the first device or the second device is first connected to the management server; and registering information about the first device, the second device, or updating already registered information based on a determination result.

The application synchronization method may further include storing the second application list in the management server.

The generating the second application list may include verifying version information about an application included in the second application list and generating the second application list to include a latest version of an application based on a verification result.

The application synchronization method may further include determining whether the second device supports the latest version of the application, and the second application list may include an application in a version supported by the second device.

The application synchronization method may further include determining a recommended application for the second device, and the recommended application may be included in the second application list.

The recommended application may be determined based on at least one of a ranking of an application downloaded to a device in a same model as the second device, a record of application installation by a user of the second device, and information about a popular application in a same category.

According to an aspect of another exemplary embodiment, there is provided a method for application synchronization by a second device capable of communicating with a management server which stores a first application list of at least one application installed in a first device, the method including: transmitting, from the second device, a request to the management server for application synchronization with the first device; receiving, at the second device, a second application list from the management server, wherein the second application list is generated by excluding an application not supported by the second device from the first application list; and installing, in the second device an application included in the second application list.

The method may further include connecting to an application market from the second device; and receiving, at the second device, an application included in the second application list from the application market.

The second application list may include a pre-installed application installed in the second device and a user installed application selectively installed by a user of the first device.

The second application list may include a latest version of an application.

The latest version of the application is supported by the second device.

The second application list may include a recommended application for the second device.

The recommended application may be determined based on at least one of a ranking of an application downloaded to a device in a same model as the second device, a record of application installation by a user of the second device, and information about a popular application in a same category.

The foregoing and/or other aspects may be achieved by providing a management server capable of communicating with a plurality of devices, the management server including: a communication unit configured to receive, from a first device, a first application list of an application installed in a first device; a storage unit configured to store the first application list; and a controller configured to: determine whether a second device supports the application included in the first application list, generate a second application list by excluding the application from the first application list in response to the application not being supported by the second device, and including the application in response to the application being supported by the second device, and control the communication unit to transmit the second application list to the second device in response to a request for application synchronization with the first device being received from the second device through the communication unit.

The management server may further include an authentication manager configured to authenticate the first device and the second device, and the first device and the second device may be authenticated based on a same user information.
The first application list may include a pre-installed application installed in the first device and a user installed application selectively installed by a user in the first device.

The controller may compare the first application list with an application list of the first device already stored in the storage unit and update the already stored application list of the first device to the first application list based on a comparison result.

The controller may determine whether the first device or the second device is first connected to the management server, and register information about the first device, the second device, or update already registered information based on a determination result.

The storage unit may store the second application list.

The controller may verify version information about an application included in the second application list and generate the second application list to include a latest version of an application based on a verification result.

The controller may determine whether the second device supports the latest version of the application, and the second application list may be generated to include an application in a version supported by the second device.

The controller may determine a recommended application for the second device, and the second application list may be generated to include the recommended application.

The recommended application may be determined based on a ranking of an application downloaded to a device in a same model as the second device or a record of application installation by a user of the second device.

The foregoing and/or other aspects may be achieved by providing a device capable of communicating with a management server which stores a list of an application installed in at least one device, the device including: a communication unit configured to communicate with the management server and transmit a request for application synchronization with a predetermined device to the management server; and a controller configured to: control the communication unit to receive a second application list from the management server; and install an application included in the second application list, wherein the second application list is generated by excluding an unsupported application from applications included in a first application list of the predetermined device associated with the request for application synchronization.

The communication unit may be configured to connect to an application market and receive, from the application market, an application in the second application list.

The second application list may include a pre-installed application installed in the device and a user installed application selectively installed by a user.

The second application list may include a latest version of an application.

The second application list may include a recommended application.

The recommended application may be determined based on a ranking of an application downloaded to devices in a same model or a record of application installation by a user.

The above and/or other aspects will become apparent and more readily appreciated from the following description of the exemplary embodiments, taken in conjunction with the accompanying drawings, in which:
FIG. 1 illustrates an application synchronization system according to an exemplary embodiment.
FIG. 2 illustrates combining a set-back box with a display apparatus according to an exemplary embodiment.
FIG. 3 is a block diagram illustrating a configuration of a first device, a second device, a management server, and a market server which constitute an application synchronization system according to an exemplary embodiment.
FIG. 4 is a block diagram illustrating a configuration of a third controller of a management server according to an exemplary embodiment.
FIGS. 5 through 7 each illustrate an operation of a third controller according to one or more exemplary embodiments.
FIG. 8 illustrates a process of synchronizing a target device with a source device according to an exemplary embodiment.
FIGS. 9 and 10 illustrate user interfaces displayed in the synchronization process according to one or more exemplary embodiments.
FIG. 11 is a flowchart illustrating an application synchronization method of a management server according to an exemplary embodiment.
FIG. 12 is a flowchart illustrating an application synchronization method of the first device according to an exemplary embodiment.
FIG. 13 is a flowchart illustrating an application synchronization method of the second device according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

Further, the following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing steps and/or operations described is an example; however, the sequence of and/or operations is not limited to that set forth herein and may be changed as is known in the art, with the exception of steps and/or operations necessarily occurring in a particular order.

The exemplary embodiments may be embodied in many different forms and should not be construed as being limited to the embodiments set forth herein. These embodiments are provided so that this disclosure will be thorough and complete and will fully convey the exemplary embodiments to those of ordinary skill in the art. The scope is defined not by the detailed description but by the appended claims.

The term "...unit" used in the embodiments indicates a component including software or hardware, such as a Field Programmable Gate Array (FPGA) or an Application-Specific Integrated Circuit (ASIC), and the "...unit" performs certain roles. However, the "...unit" is not limited to software or hardware. The "...unit" may be configured to be included in an addressable storage medium or to reproduce one or more processors.

Therefore, for example, the term "...unit" includes components, such as software components, object-oriented software components, class components, and task components, processes, functions, attributes, procedures, subroutines, segments of program code, drivers, firmware, microcode, circuits, data, a database, data structures, tables, arrays, and variables. A function provided inside components and "...units" may be combined into a smaller number of components and "...units", or further divided into additional components and "...units".

The term "module" as used herein means, but is not limited to, a software or hardware component, such as an FPGA or ASIC, which performs certain tasks. A module may advantageously be configured to reside on an addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Although the terms used herein are generic terms which are currently widely used and are selected by taking into consideration functions thereof, the meanings of the terms may vary according to the intentions of persons skilled in the art, legal precedents, or the emergence of new technologies. Furthermore, some specific terms may be randomly selected by the applicant, in which case the meanings of the terms may be specifically defined in the description of the exemplary embodiment. Thus, the terms should be defined not by simple appellations thereof but based on the meanings thereof and the context of the description of the exemplary embodiment. As used herein, expressions such as "at least one of," when preceding a list of elements, modify the entire list of elements and do not modify the individual elements of the list.

It will be understood that when the terms "includes," "comprises," "including," and/or "comprising," when used in this specification, specify the presence of stated elements and/or components, but do not preclude the presence or addition of one or more elements and/or components thereof. As used herein, the term "module" refers to a unit that can perform at least one function or operation and may be implemented utilizing any form of hardware, software, or a combination thereof.

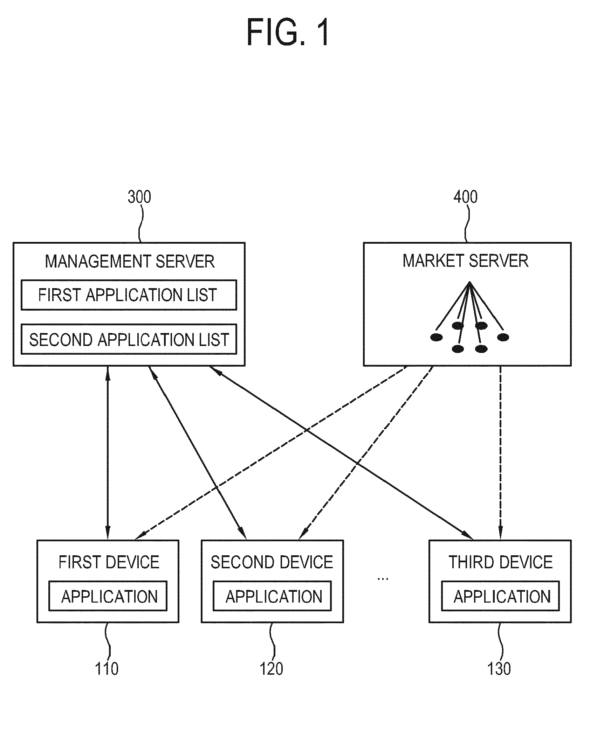

FIG. 1 illustrates an application synchronization system according to an exemplary embodiment.

As shown in FIG. 1, the application synchronization system according to the exemplary embodiment includes a plurality of devices 110, 120, and 130 each of which includes at least one application installed, a management server 300 managing the devices 110, 120, and 130, and an application market server 400 providing the application installed on the devices 110, 120, and 130.

The management server 300 authenticates the devices 110, 120, and 130 and registers information about each of the devices 110, 120, and 130 (also referred to as "device information") when the devices are connected to the management server 300. When there is already registered information about a device, the registered information may be updated to the latest information.

Device information may include user account information for authentication, and two or more devices may use the same user account. In the present exemplary embodiment, the management server 300 may perform application synchronization with respect to a plurality of devices using the same user account.

Further, the management server 300 stores an application list that contains applications installed on each of the devices 110, 120, and 130. Here, two or more devices using the same user account may store and manage application lists in connection with each other.

At least one application may be installed on the devices 110, 120, and 130. The installed application may be at least one of a pre-installed application installed on the devices and a user installed application selectively installed by a user onto the devices.

Each of the devices 110, 120, and 130 may be connected to the management server 300 via a cable or wirelessly, thereby allowing the transmission of a list of an application installed on the device to the management server 300 and the receiving of a predetermined application list from the management server 300 at the device. The received application list may include at least one of a recommended application, a pre-installed application, and a user installed application. The recommended application may be determined using information about rankings of applications downloaded to the same model of devices by different users, information about installation records of applications with respect to a user account of the device, information about popular applications in the same category, or the like.

The plurality of devices 110, 120, and 130 connect to the market server 400 configure to provide at least an application via a cable or wirelessly. Accordingly, the devices 110, 120, and 130 may download the application, and the downloaded application may be installed on corresponding devices.

Here, the downloaded application may be determined based on the application list received from the management server 300. Further, the devices 110, 120, and 130 may connect to the market server 400 by user manipulation regardless of the application list and select, download, and install a user selected application.

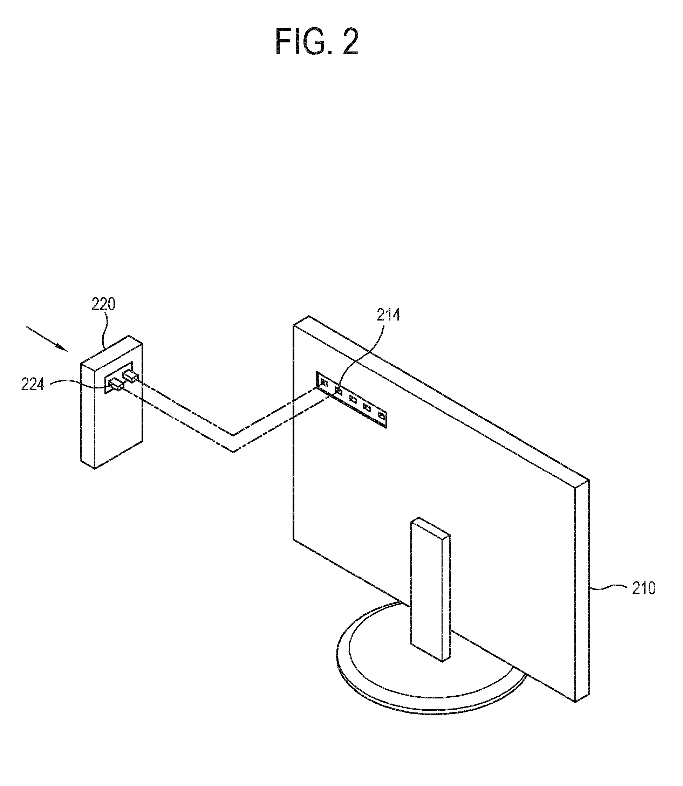

The market server 400 (hereinafter, also referred to as an "application market") provides an application to the devices 110, 120, and 130. The market server 400 may be managed by a manufacturer of a device, a telecommunications company, or the like. Although FIGS. 1 and 2 illustrate that an application is downloaded from one market server 400, exemplary embodiments are not limited thereto. Alternatively, a plurality of market servers 400 may be provided.

While the management server 300 and the market server 400 are separated in the present embodiment illustrated in FIG. 1, a single server may be configured to serve as both a management server and a market server.

The devices 110, 120, and 130 may be configured as various digital devices which allow an application to be installed, for example, a TV (smart TV or Internet Protocol television (IPTV)), a set-top box, a set-back box, a desktop computer, a laptop computer (notebook computer), a tablet PC, a mobile phone (smartphone), a car navigation system, and a portable media player (MP3 player).

As shown in FIG. 2, a first device 210 is configured as a display apparatus, such as a TV, while a second device 220 is configured as a set-back box.

FIG. 2 illustrates that a set-back box may be combined with a display apparatus according to an exemplary embodiment.

As shown in FIG. 2, the display apparatus 210 and the set-back box 220 are connected such that they can communicate with each other. Also, the set-back box 220 is connected to the display apparatus 210, that is, an existing device, to serve as an extension device. The display apparatus 210 and the set-back box 220 ,when connected to each other, may transmit and receive an image signal, such as a broadcast signal, and a control signal, such as various types of data and power control signals.

In the present exemplary embodiment, the display apparatus 210 is configured as a TV which displays broadcast images based on broadcast signals/broadcast information/broadcast data transmitted from a transmitter of a broadcasting station.

However, the display apparatus 210 may be configured as various types of devices which are capable of displaying images, without being limited to a TV.

Also, the display apparatus 210 may display any kind of images, without being limited to broadcast images. For example, the display apparatus 210 may display a variety of images, such as videos, still images, applications and on-screen display (OSD) based on signals/data received from different image sources (not shown), as well as a graphic user interface (GUI) for controlling various operations.

The set-back box 220 is connected to the display apparatus 210 to communicate therewith as shown in FIG. 2. The set-back box 220 may upgrade existing hardware/software configurations of the connected display apparatus 210 and enable an image signal to be processed by the upgraded hardware/software configurations of the display apparatus 210, thereby displaying an image with improved image quality. For example, the set-back box 220 may be a device that acts as an upgrade to the hardware of a TV, such as an image processing circuit, and may be detachable from the display apparatus 210.

In another exemplary embodiment, the set-back box 220 may be connected to the display apparatus 210 wirelessly. In this case, the set-back box 220 may be supplied with operating power from a separate external power source or battery.

The display apparatus 210 may process an image signal received from the outside alone according to a preset image processing process and display an image.

When the set-back box 220 is connected to the display apparatus 210, hardware/software configurations that are configured to perform an image processing process are upgraded. The set-back box 220 receives and processes an image signal from the display apparatus 210 and transmits the processed image signal to the display apparatus 210. The display apparatus 210 displays an image corresponding to the image signal received from the set-back box 220. Accordingly, an image with relatively improved image quality may be provided to a user.

In the present embodiment, the display apparatus 210 and the set-back box 220 perform wire-based or wireless communications with the outside. In detail, the display apparatus 210 and the set-back box 220 connect to a market server. Similar to the market server 400 as shown in Figure 1, to download and install applications based on a user selection, and lists of installed applications (first and second application lists) are transmitted to a management server, similar to the management server 300 as shown in Figure 1.

Meanwhile, when the set-back box 220 is first connected to the display apparatus 210, the set-back box 220 may receive a second application list from the management server, connect to the market server, and download and install an application included in the second application list. Here, the second application list may be obtained by excluding an application not supported by the set-back box 220 from a first application list of the display apparatus 210. Further, the display apparatus 210 and the set-back box 220 may be authenticated using the same user account in the management server.

Creation of the second application list will be described in detail in connection with configuration and operations of the management server.

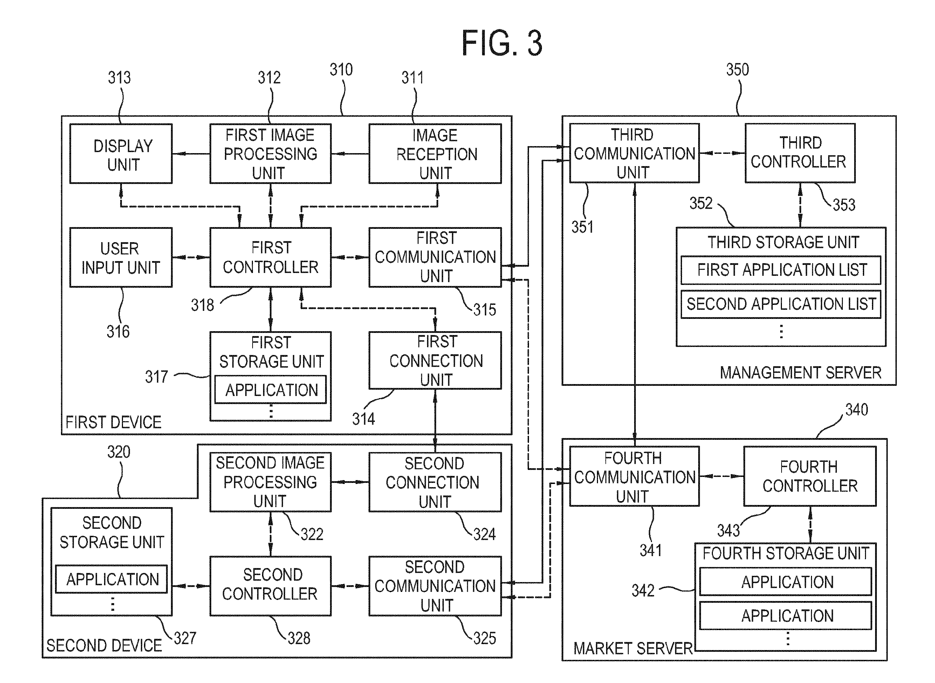

FIG. 3 is a block diagram illustrating a configuration of a first device 310, a second device 320, a management server 350, and a market server 340 which constitute an application synchronization system according to an exemplary embodiment.

As shown in FIG. 3, the first device 310, may be configured as a display apparatus, and may include an image reception unit 311 to which at least one image source (not shown) is connected, a first image processing unit 312 processing an image signal received from the image source, a display unit 313 displaying an image based on the image signal processed by the first image processing unit 312, a first connection unit 314 connected to a peripheral device including the second device 320, a first communication unit 315 conducting wire-based or wireless communications with the outside, a user input unit 316 outputting a preset command based on a user input, a first storage unit 317 storing data and information, and a first controller 318 controlling operations of general components of the first device 310.

Although FIG.3 illustrates that the first device 310 is configured as a display apparatus, such as a TV, the first device 310 may be configured as various digital devices which allow an application to be installed.

The image reception unit 311 may receive a broadcast signal transmitted from a transmission device (not shown) of a broadcasting station. For example, the image reception unit 311 may include an antenna (not shown) and/or a tuner (not shown) to receive the broadcast signal. Further, when the first device 310 is an input/output (I/O) device receiving an image signal from an external image source, the image reception unit 311 may be configured as various forms corresponding to standards of received image signals and configurations of the image source or the first device 310. For example, the image reception unit 311 may receive signals/data in accordance with high definition multimedia interface (HDMI), universal serial bus (USB), or component standards and include a plurality of terminals (not shown) corresponding to the respective standards.

The first image processing unit 312 performs various kinds of preset image processing processes on an image signal received from the image reception unit 311. The first image processing unit 312 outputs the processed image signal to the display unit 313, so that an image based on the image signal is displayed on the display unit 313.

The first image processing unit 312 may perform any type of image processing process, without being limited to, for example, demultiplexing to separate a signal into characteristic signals, decoding corresponding to an image format of an image signal, de-interlacing to convert an interlaced image signal into a progressive form, scaling to adjust an image signal to a preset resolution, noise reduction to improve image quality, detail enhancement, frame refresh rate conversion, or the like. The first image processing unit 312 may be configured as an image processing board (not shown) in which a circuit system to conduct such processes including various chip sets (not shown), a memory (not shown), electronic components (not shown) and wiring (not shown), is mounted on a printed circuit board (PCB, not shown).

The display unit 313 displays an image based on an image signal output from the first image processing unit 312. The display unit 313 may be configured in various display types using liquid crystals, plasma, light emitting diodes, organic light emitting diodes, a surface conduction electron emitter, a carbon nano-tube, nano-crystals, or the like, without being limited thereto.

The display unit 313 may further include an additional element depending on a display mode thereof. For example, in a display mode using liquid crystals, the display unit 313 may include a liquid crystal display (LCD) panel, a backlight unit (not shown) providing light to the panel, and a panel drive board (not shown) driving the panel.

The first connection unit 314 is configured as an interface through which the second device 320 is connectable and conducts transmission and reception of various data signals, image signals, control signals, and power between the first device 310 and the second device 320. For example, the first connection unit 314 may include a terminal in accordance to an HDMI or component standard to transmit or receive an image signal and include a USB terminal to transmit or receive a data signal/control signal/power.

Alternatively, all signals transmitted from the first device 310 to the second device 320 may be encoded for content security. The encoded signals may be decoded in the second device 320 and then processed.

An external device connected to the first connection unit 314 is not limited to the second device 320, but any device capable of transmitting and receiving a signal/data through the first connection unit 314 may be connected to the first connection unit 314.

The first communication unit 315 communicates with the outside including the management server 350 and the market server 340. The first communication unit 315 includes wire-based and wireless communication modules to enable network communications with the outside.

The first device 310 connects to the management server 350 through the first communication unit 315 to transmit and receive a list of applications installed on the first device 310 (hereinafter, also referred to as a first application list). Further, the first device 310 connects to the market server 340 through the first communication unit 315 to download applications included in the first application list.

The user input unit 316 transmits various preset control commands or information to the first controller 318 by a user's manipulation and input. The user input unit 316 may be configured as a menu key, an input panel installed on an outside of the first device 310, or as a remote controller separate from the first device 310.

Alternatively, the user input unit 316 may be configured as a single body with the display unit 313. For example, if the display unit 313 is a touch screen, a user may transmit a preset command to the first controller 318 through an input menu (not shown) displayed on the display unit 313.

The first storage unit 317 stores data according to control by the first controller 318. The first storage unit 317 is configured as a nonvolatile memory, such as a flash memory and a hard disk drive. The first storage unit 317 is accessed by the first controller 318, and the data stored in the first storage unit 317 may be read/recorded/revised/deleted/updated by the first controller 318. The first storage unit 317 may store data obtained through an operation by the first controller 318.

The first storage unit 317 may store, for example, an operating system (OS) for running the first device 310 and various applications, image data and optional data which are executable in the OS.

According to an exemplary embodiment, an application is downloaded from the market server 340 and installed on the first device 310 and includes a pre-installed application installed on the first device 310 and a user installed application selectively installed by a user. The pre-installed application is already installed on a product on sale, such as the first device 310 so that downloading and installing processes are not needed.

Alternatively, when the first device 310 connects to the management server 350 for the first time after the product is purchased, the first device 310 may receive a pre-installed application list from the management server 350, automatically download an application included in the pre-installed application list from the market server 340, and store and install the application on the first storage unit 317.

In this way, the first storage unit 317 further stores a first application list of applications installed on the first device 310 (including a pre-installed application and a user-installed application), and the stored first application list is transmitted to the management server 350 and stored and managed in the management server 350. The first application list includes version information about each application.
Further, the first storage unit 317 further stores user account information for authentication of the first device 310. The management server 350 may authenticate the first device 310 by token-based authentication. To this end, a hardware or software token device issuing a token (and generating a password) using the user account information (personal identification information) may be installed on the first device 310.

In the present exemplary embodiment, the first storage unit 317 stores at least one program performing a predetermined function. For example, the first storage unit 317 stores an OS, a web browser, an open software platform, or the like along with a plurality of applications selectively downloaded by a user through the open software platform. The first storage unit 317 may store both the aforementioned programs and version information about each program.

Alternatively, when the second device 320 is connected through the first connection unit 314, the first storage unit 317 may be accessed by the second device 320, and the data stored in the first storage unit 317 may be read/recorded/revised/deleted/updated by the second controller 328.

The first controller 318 performs control operations of various components of the first device 310. For example, the first controller 318 conducts an image processing process of the first image processing unit 312, transmission and reception of signals/information/data through the image reception unit 311 or the first connection unit 314, and a control operation in response to a command from the user input unit 316, thereby controlling overall operations of the first device 310.

In detail, the first controller 318 connects to the management server 350 to receive the pre-installed application list, controls the first communication unit 315 to download an application included in the received list from the market server 340, and installs the downloaded application on the first device 310. Further, the first controller 318 controls the first communication unit 315 to download an application selected according to user manipulation through the user input unit 316 (user installed application) and installs the downloaded application on the first device 310.

In addition, the first controller 318 controls the first communication unit 315 to periodically update the first application list of the applications (including a pre-installed application and a user-installed application) installed on the first device 310 and transmit the first application list to the management server 350.

The first device 310 having the foregoing configuration may need upgrading over time due to various factors including technology development. Upgrading is necessary for various cases, for example, to receive an image signal in a new format which is not proposed when the first device 310 is first manufactured, to receive an image signal with a higher level of resolution than supported solely by the first device 310 with a trend towards a demand for high-quality images, or to reduce system load of the first device 310.

Upgrading the first device 310 may be carried out in terms of hardware and software. In the present exemplary embodiment, the second device 320 provided to upgrade the first device 310 is connected to the first connection unit 314, thereby upgrading at least one of the existing hardware and software configurations of the first device 310.

The second device 320 includes hardware/software configurations corresponding to at least part of hardware/software resources of the first device 310. These hardware/software configurations of the second device 320 are configured to perform more improved functions than at least part of the resources of the first device 310.

When the second device 320 is connected to the first device 310, the hardware/software configurations of the second device 320 replaces at least part of the existing resources of the first device 310, thereby ultimately improving quality of an image displayed on the first device 310.

Hereinafter, the configuration of the second device 320 will be described.
As shown in FIG. 3, the second device 320 includes a second image processing unit 322 capable of performing processes corresponding to at least part of the image processing processes of the first image processing unit 312, a second connection unit 324 connected to the first connection unit 314 of the first device 310, a second communication unit 325 conducting wire-based and wireless communications with the outside, a second storage unit 327 storing data/information, and the second controller 328 controlling general operations of the second device 320.

The second connection unit 324 is connected to the first connection unit 314, thereby enabling communications between the second device 320 and the first device 310. The second connection unit 324 may be connected to at least one terminal (not shown) among a plurality of terminals of the first connection unit 314.

For example, the second connection unit 324 may be connected to an HDMI terminal (not shown) for transmission and reception of image signals between the first device 310 and the second device 320 or be connected to a USB terminal (not shown) for transmission and reception of data and power. However, the preceding examples are provided for illustrative purposes only, and the first connection unit 314 and the second connection unit 324 may be connected in various modes.

The second image processing unit 322 may perform a second process corresponding to a first process, which is at least part of the processes performed by the first image processing unit 312 of the first device 310. The terms "first process" and "second process" are used only for convenience to distinguish processes from each other and such processes may be a single unit process or a plurality of unit processes. The second process is functionally improved as compared with the first process and is achieved by upgrading hardware, such as a chip set, or software, such as algorithms/executable codes/programs.

The second image processing unit 322 performs the second process, substituted for the first process, according to control by the first controller 318 or the second controller 328 when the first device 310 and the second device 320 are connected. In this manner, the second process, which is more functionally improved than the first process, is implemented instead of the first process, thereby enhancing the image processing process overall.

The second communication unit 325 conducts communications with the outside including the management server 350 and the market server 340. The second communication unit 325 includes wire-based and wireless communication modules to enable network communications with the outside.

The second device 320 connects to the management server 350 through the second communication unit 325, thereby transmitting and receiving a list of an application installed on the second device 320 (hereinafter, also referred to as a "second application list"). Further, the second device 320 connects to the market server 340 through the second communication unit 325 to download applications included in the second application list.

The second storage unit 327 stores data. The second storage unit 327 may store, for example, an OS for running the second device 320 and various applications, image data and optional data which are executable in the OS.

Here, the applications are downloaded from the market server 340 and installed in the second device 320 and include a pre-installed application installed on the second device 320 and a user installed application selectively installed by a user.

When the second device 320 is connected to the first device 310 and first connected to the management server 350 after purchased, the second device 320 may request application synchronization with the first device 310 to the management server 350.

The second device 320 may receive the second application list from the management server 350 in response to the request, automatically download an application included in the second application list from the market server 340, and store and install the application in the second storage unit 327.

The second storage unit 327 further stores the second application list of applications installed on the second device 320 (including a pre-installed application and a user-installed application), and the stored second application list is also stored and managed in the management server 350. The second application list includes version information about each application.

Further, the second storage unit 327 further stores user account information for authentication of the second device 320. The management server 350 may authenticate the second device 320 by token-based authentication. To this end, software generating a password using the user account information (personal identification information) may be installed on the second device 320.

In the present exemplary embodiment, the second storage unit 327 stores at least one program performing a predetermined function. For example, the second storage unit 327 stores an OS, a web browser, an open software platform, or the like along with a plurality of applications selectively downloaded by a user through the open software platform. The second storage unit 327 may store both the aforementioned programs and version information about each program.

The second storage unit 327 is configured as a nonvolatile memory, such as a flash memory and a hard disk drive. The second storage unit 327 is accessed by the first controller 318 or the second controller 328, and the data stored in the second storage unit 327 is read/recorded/revised/deleted/updated by these controllers 318 or 328.

Meanwhile, the second storage unit 327 may be also accessed by not only the second controller 328 but the first controller 318 depending on a configuration thereof.

The second controller 328 performs control operations of various components of the second device 320 to perform general image processing processes. For example, the second controller 328 conducts an image processing process of the second image processing unit 322 and transmission and reception of signals/information/data through the second connection unit 324, thereby controlling overall operations of the second device 320.

In detail, the second controller 328 connects to the management server 350 to receive the second application list, controls the second communication unit 325 to download an application included in the received list from the market server 340, and installs the downloaded application on the second device 320. Further, the second controller 328 receives a user input via the user input unit 316 of the first device 310 through the second connection unit 324, controls the second communication unit 325 to download an application based on the user input (user installed application) from the market server 340, and installs the downloaded application on the second device 320.

In addition, the second controller 328 controls the second communication unit 325 to periodically update the second application list of the applications (including a pre-installed application and a user-installed application) installed on the second device 320 and transmit the second application list to the management server 350.

Here, in the present exemplary embodiment, the second device 320 may not include the second communication unit 325. In this case, the first device 310 may receive the second application list and the applications through the first communication unit 315, and then the second device 320 may receive the second application list and the applications through the second connection unit 320.

The first controller 318 and the second controller 328 may be configured as a CPU.

Thus, when the second controller 328 is able to perform a more improved function than the first controller 318, the second controller 328 may disable the first controller 318 entirely or partly and control all or part of operations of the first controller 318, instead of the first controller 318. Alternatively, the first controller 318 and the second controller 328 may perform control operations together.

The first controller 318 and the second controller 328 may further include a graphic processing unit (GPU) sub-serving the CPU, a digital signal processor (DSP), and a memory such as a double data rate synchronous dynamic random access memory (DDR RAM).

In the present embodiment illustrated in FIG. 3, the first device 310 is configured as a display apparatus, and the second device 320 is configured as a set-back box, without being limited thereto. Alternatively, the first and second devices 310 and 320 may be also configured as independent digital devices, for example, a smartphone and a tablet PC. In this instance, without the first and second connection units 314 and 324 connecting the first and second devices 310 and 320, the first and second devices 310 and 320 may be configured to conduct both communications with each other and communications with the management server 350 and the market server 340 through the first and second communication units 315 and 325.

Further, the embodiment with reference to FIG. 3 illustrates that the second device 320 requests application synchronization with the first device 310 and receives an application list from the management server 350 in response to the request. On the contrary, the first device 310 may request application synchronization with the second device 320. Also, the first device 310 or the second device 320 may be subjected to application synchronization with a third device, for example, the device 130 of FIG. 1.

Hereinafter, the configuration of the management server 350 will be described.

As shown in FIG. 3, the management server 350 includes a third communication unit 351 conducting wire-based and wireless communications with the outside, a third storage unit 352 storing data/information, and a third controller 353 controlling general operations of the management server 350.

The third communication unit 351 conducts communications with the outside including the plurality of devices 310, 320, and 130 and the market server 340. The third communication unit 351 includes wire-based and wireless communication modules to enable network communications with the outside.

In the present exemplary embodiment, the third communication unit 351 conducts transmission and reception of an application list with each of the first and second devices 310 and 320. For example, when the first device 310 is first connected to the management server 350, the third communication unit 351 may transmit the pre-installed application list installed on the first device 310 and periodically receive a list of applications installed on the first device 310 as the first application list. Further, when an application synchronization request with the first device 310 is received from the second device 320, the third communication unit 351 may transmit the second application list to the second device 320 in response to the request.

The third communication unit 351 communicates with the market server 340 to acquire information about a recommended application with respect to a device and transmits a recommended application list created based on the acquired information to the device.

The third storage unit 352 may be configured as a nonvolatile storage medium, such as a flash memory and a hard disk drive. The third storage unit 352 is accessed by the third controller 353, and the data stored in the third storage unit 352 may be read/recorded/revised/deleted/updated by the third controller 353. The third storage unit 352 may store data obtained through an operation by the third controller 353.

In the present exemplary embodiment, the third storage unit 352 stores a plurality of application lists of applications installed in the respective devices 310, 320, and 130. The stored application lists may be updated by periodical or aperiodic communications with the relevant devices, and the application lists of the respective devices include version information about each application.

The third storage unit 352 further stores model information and firmware information including the version information supporting an application management service, a model number as device information, a firmware version, and user account information. The management server 350 may determine whether to support a service for a connected device, for example, whether to support an application management function, using the stored information. In the present embodiment, two or more devices may use a single user account. In this case, information about the devices using the same user account are stored and managed in the third storage unit 352 in connection with each other.

The third storage unit 352 further stores authentication information for authentication of the devices 310, 320, and 130. For example, the management server 350 may authenticate each device by token-based authentication using a Secure Hash Algorithm (SHA). To this end, an authentication token may be stored in the third storage unit 352.

The third controller 353 authenticates the devices 310, 320, and 130 and manages the application lists installed in the respective devices 310, 320, and 130.

In detail, the third controller 353 receives the first application list of the applications installed in the first device 310 from the first device 310 through the third communication unit 351 and stores the first application list in the third storage unit 352.

The management server 350 may receive an application synchronization request with the first device 310 from the second device 320 through the third communication unit 351. In response to the synchronization request, the third controller 353 determines whether the applications included in the first application list stored in the third storage unit 352 are supported by the second device 320 and generates the second application list by excluding an application not supported by the second device 320 from the second application list. The third controller 353 controls the third communication unit 350 to transmit the generated second application list to the second device 320.

Hereinafter, the configuration of the market server 340 will be described.

As shown in FIG. 3, the market server 340 includes a fourth communication unit 341 conducting wire-based and wireless communications with the outside, a fourth storage unit 342 storing unlimited data/information, and a fourth controller 343 controlling general operations of the market server 340.

The fourth communication unit 341 communicates with the outside including the plurality of devices 310 and 320 and the management server 350. The fourth communication unit 341 includes wire-based and wireless communication modules to enable network communications with the outside.

In the present exemplary embodiment, the fourth communication unit 341 transmits an application to each of the first and second devices 310 and 320. For example, when the first device 310 requests transmission of an application included in the first application list, the fourth communication unit 341 transmits the corresponding application to the first device 310. Likewise, when the second device 320 requests transmission of an application included in the second application list, the fourth communication unit 341 transmits the corresponding application to the second device 320.

Further, the fourth communication unit 341 may transmit information about various applications to the management server 350. For example, when the management server 350 requests information about a recommended application, the fourth communication unit 341 may transmit information about rankings of applications downloaded to a particular device model, information about records of application installation by a particular user, information about popular applications in the same category, or the like.

The fourth storage unit 342 may be configured as a nonvolatile storage medium, such as a flash memory and a hard disk drive. The fourth storage unit 342 is accessed by the fourth controller 343, and the data stored in the fourth storage unit 342 may be read/recorded/revised/deleted/updated by the fourth controller 343. The fourth storage unit 342 may store data obtained through an operation by the fourth controller 343.

In the present exemplary embodiment, the fourth storage unit 342 stores a plurality of applications provided to the devices 310 and 320. Here, updated versions of applications may be provided to the devices 310 and 320.

The fourth storage unit 342 may further store information about a count of applications downloaded to each device. The stored information may be processed into information by device models, user accounts, or application categories, which may be provided to the management server 350.

Further, the fourth storage unit 342 further stores authentication information for authentication of the devices 310 and 320 to be connected. The market server 340 may use an authentication algorithm in the same form as the management server 350.

The fourth controller 343 authenticate the plurality of devices 310 and 320 and provides applications to be installed in the respective devices 310 and 320.

In detail, the fourth controller 343 receives a request for an application included in the first application list from the first device 310 through the fourth communication unit 341 and controls the fourth communication unit 341 so that the application in the first application list is downloaded to the first device 310. Likewise, the fourth controller 343 controls the fourth communication unit 341 so that an application in the second application list is downloaded to the second device 320.

Further, the fourth controller 343 may control the fourth communication unit 341 to provide various types of information about download of applications to the management server 350.

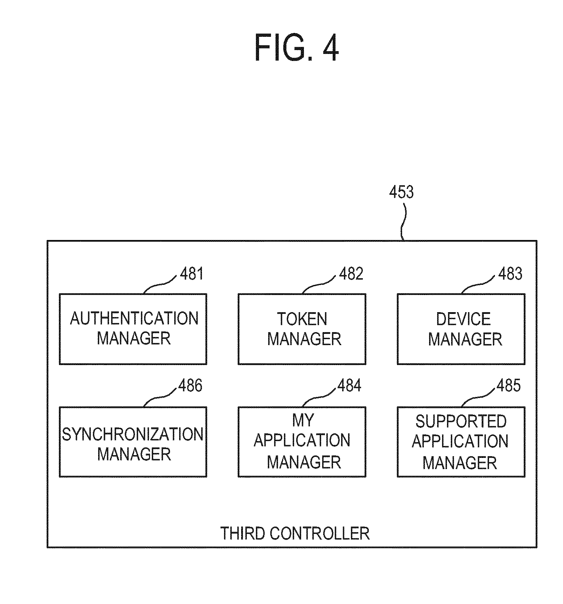

Operations of a third controller may be carried out by components, which will be described in detail with reference to FIGS. 4 to 7.

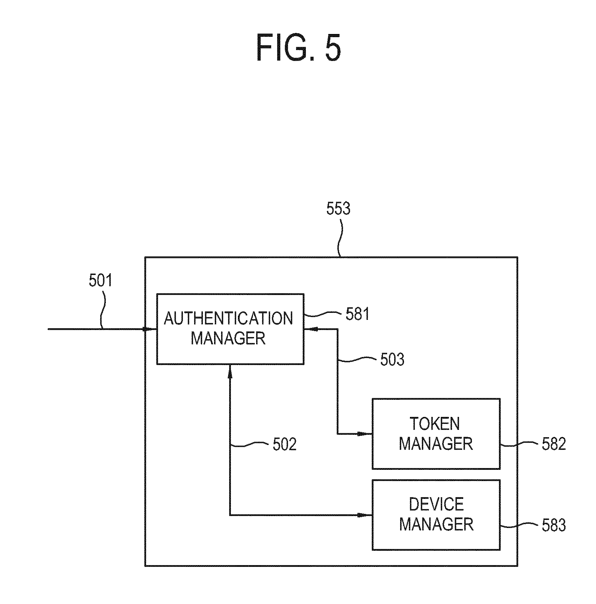

FIG. 4 is a block diagram illustrating a configuration of a third controller 453 of a management server, similar to the management server 350 of Figure 3, according to an exemplary embodiment, and FIGS. 5 to 7 illustrate operations of a third controller.

As shown in FIG. 4, the third controller 453 includes an authentication manager 481, a token manager 482., a device manager 483, a my application manager 484, a supported application manager 485, and a synchronization manager 486. The components shown in FIG. 4 may not be physically separated but distinguished by operations or functions by software.

The authentication manager 481 authenticate a plurality of devices connected to a management server via a cable or wirelessly. FIG. 4 illustrates that the authentication manager 481 and the token manager 482 are included in the third controller 453.

Alternatively, the authentication manager 481 may be provided in the management server as an independent component of the third controller 453, and the token manager 482 may be included in the authentication manager 481.

In detail, referring to FIG. 5, when at least one of a plurality of devices, for example, a first device, is connected to a management server, the management server may receive an authentication request from the first device through a third communication unit(501).

When the authentication request is made from the first device, the authentication manager 581 verifies whether the connected first device is an already registered device or a first connected device through the device manager 583 and verifies whether the first device is able to support a service (502).

The device manager 583 determines whether the first device is an already registered device or a first connected device based on the information about each device stored in a third storage unit. Here, when the first device is a first connected device, the device manager 583 registers information about the first device in the third storage unit.

When the first device is an already registered device, the device manager 583 updates already registered information about the first device in the third storage unit to latest information. Further, the device manager 583 may verify whether the first device is a service supportable model and a firmware version thereof supports a service based on the information stored in the third storage unit.

To this end, the management server communicates with each device periodically or aperiodically to acquire information about the corresponding device and update the information to latest information. When communications are carried out aperiodically, information about a device may be transmitted to the management server or updated on an occasion, for example, when firmware of the device is upgraded or a new application is installed in the device. Here, the transmitted device information includes an installed application list.

When the first device is able to support the service and the device information is registered or updated, the authentication manager 581 authenticate the first device through a token manager 582(503). For example, when token-based authentication is used, the token manager 582 may issue a token in response to the authentication request through the authentication manager 581. The authentication manager 581 returns the token issued by the token manager 582, which is stored in the third storage unit. The authentication manager 581 may authenticate the first device by comparing the stored token and a token received from the first device.

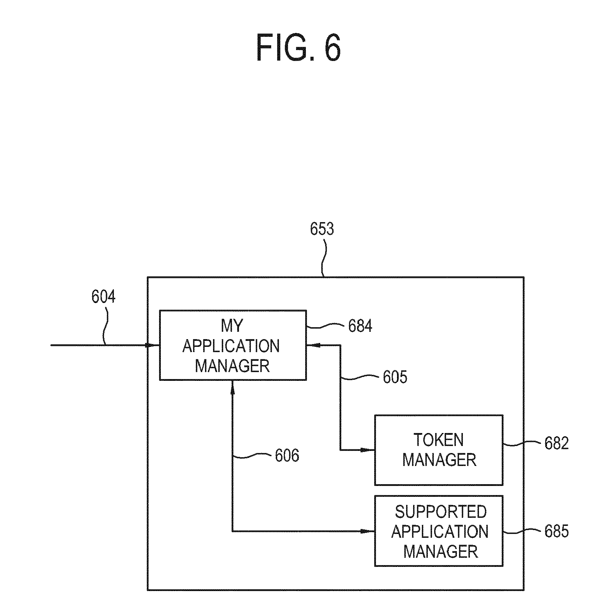

Referring to FIG. 6, when a connected device, for example, a first device, requests a corresponding first application list (604), a my application manager 684 verifies whether the first device is a valid device through a token manager 682 (605). The token manager 682 verifies whether the token transmitted from the first device through a third communication unit is valid or expired. When the first device is verified to be valid, the authentication manager 681 finally authenticates the first device.

When the first device is authenticated, a my application manager 684 forms a first application list for the first device through the supported application manager 685 (606). The formed first application list is transmitted to the my application manager 684 and includes a pre-installed application and a user installed application. The supported application manager 685 generates the first application list of applications installed in the first device based on a request of the my application manager 684.

Here, when there is a first application list already stored in the third storage unit, the supported application manager 685 loads the already stored first application list and generates the first application list to include latest versions of applications supportable in the first device based on the information about the first device, for example, firmware version information. The already stored first application list may include a pre-installed application and a user installed application.

Further, when there is no first application list already stored in the third storage unit, the supported application manager 685 generates the first application list including a pre-installed application based on the information about the first device.

Meanwhile, the first application list may further include a recommended application for the first device. The recommended application may be determined based on rankings of applications downloaded to the same model of devices as the first device, records of application installation by a user of the first device, information about popular applications in the same category, or the like. The management server communicates with the market server to receive information about the recommended application for the first device.

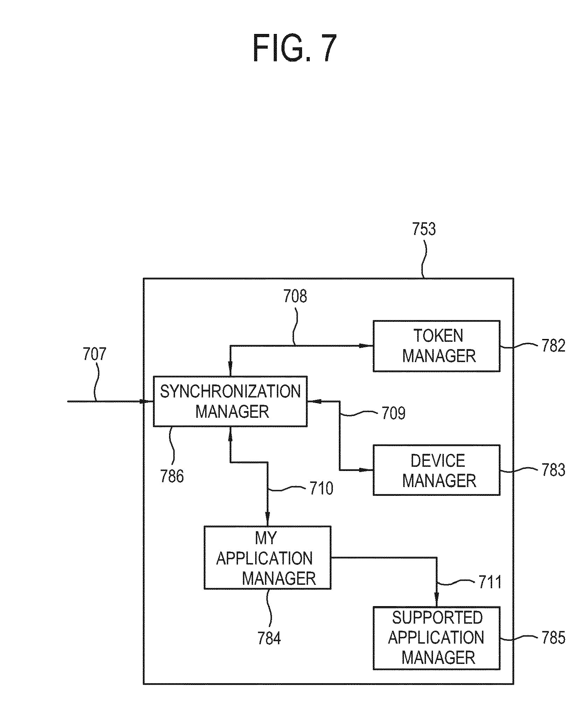

Referring to FIG. 7, when a connected device, for example, a second device, requests application synchronization with the first device (707), the synchronization manager 786 verifies whether the second device is a valid device through the token manager 782 (708). The token manager 782 verifies whether a token transmitted from the second device through the third communication unit is valid or expired. When the second device is verified to be valid, the authentication manager 781 identifies user account information about the first and second devices and finally authenticates the second device. Here, the authentication manager 781 may authenticate the first and second devices based on the same user information.

When the second device is authenticated, the synchronization manager 786 verifies through the device manager 783 whether the first and second devices to be synchronized are valid devices capable of supporting a service via model information and firmware information about the first and second devices. Here, the first and second devices are objects of synchronization, wherein the first device is a source device and the second device is a target device.

The synchronization manager 786 forms a second application list to synchronize the first application list of the source device with the target device through the my application manager 784 (710). Here, the my application manager 784 verifies the first application list of the source device through the supported application manager 785 and selects an application supported by the target device among the applications included in the first application list, thereby generating the second application list including latest versions of applications installed and supported by the target device (711).

The supported application manager 786 verifies whether each of the applications included in the first application list is supported by the second device. The generated second application list is transmitted to the synchronization manager 786 via the my application manager 784 and includes a pre-installed application and a user installed application. The second application list is obtained by excluding an application not supported by the second device from the first application list.

Further, the second application list may further include a pre-installed application needed for the second device, regardless of the first application list, and a recommended application for the second device. The recommended application may be determined based on rankings of applications downloaded to the same model of devices as the second device, records of application installation by a user of the second device, information about popular applications in the same category, or the like. The management server communicates with the market server to receive information about the recommended application for the second device.

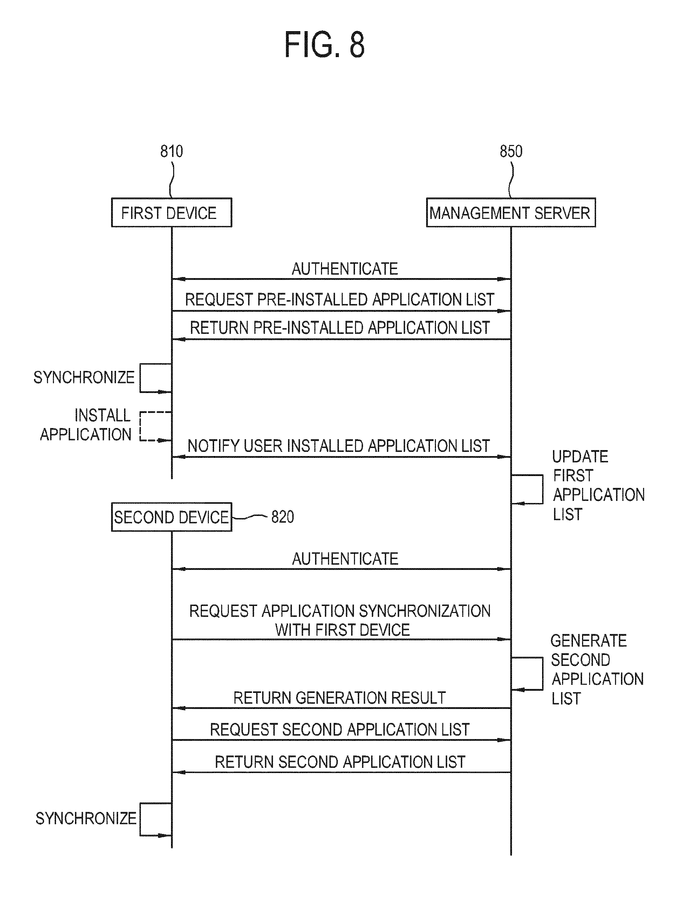

Hereinafter, an application synchronization process between a source device 810 and a target device 820 will be described in detail with reference to FIG. 8.

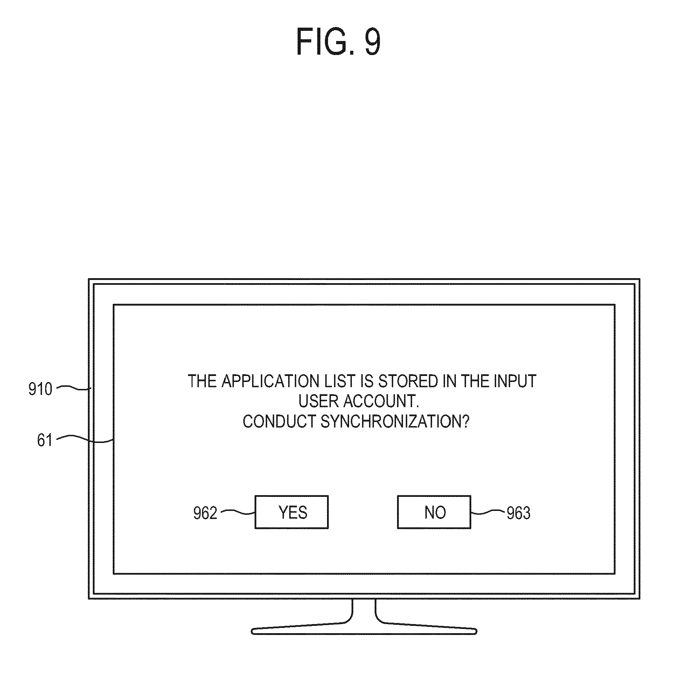

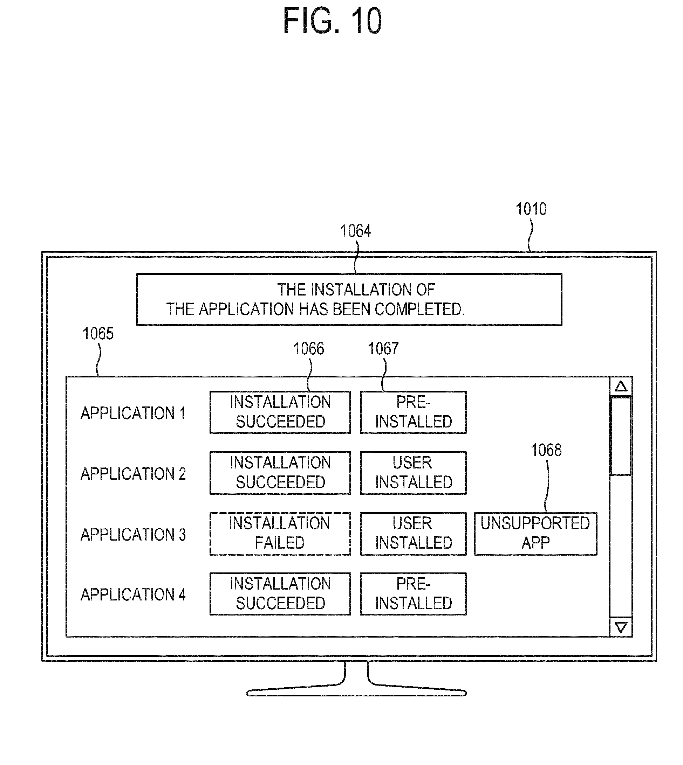

FIG. 8 illustrates a process of synchronizing a target device with a source device according to an exemplary embodiment, and FIGS. 9 and 10 illustrate user interfaces displayed in the synchronization process.

Although FIG. 8 illustrates that the first device 810 is a source device and the second device 820 is a target device, the present embodiment is not limited thereto.

As shown in FIG. 8, the first device 810 connects to a management server 850 and attempts to authenticate after booted up. When authentication succeeds, the first device 810 requests an pre-installed application list basically installed from the management server 850, and the management server 850 returns the pre-installed application list of the first device 810 to the first device 810 in response to the request. The returned pre-installed application list may be stored in the management server 850 as a first application list.

The first device 810 performs synchronization with the received pre-installed application list. Here, the first device 810 may compare an actually installed application with the pre-installed application list and download and install an application from a market server, thereby achieving synchronization. Installing an application includes updating an application to a latest version.

Regardless of synchronization, the first device 810 may install at least one user installed application based on a user selection or update an already installed application. A list of the user installed application is transmitted to the management server 850, or the management server 850 is notified of the list. Here, notification may be carried out when the user installed application is installed or by communications between the first device 810 and the management server 850 performed periodically.

The management server 850 updates the existing first application list to add an application included in the user installed application list received from the first device 810. According to this process, the management server 850 may maintain information about latest application installation in the devices managed by the management server 850.

Referring to FIG. 8, the second device 820, different from the first device 810, may connect to the management server 850 and attempt to authenticate after booted up.

Here, the management server 850 may authenticate the second device 820 using a user account input in the second device 820. When the first and second devices 810 and 820 have the same user account, the management server 850 may verify that the first application list is present and notify the second device 820 that the first application list is present.

In response to the notification, as shown in FIG. 9, a second device may control and display a message 961 as a user interface for indicating that the application list (first application list) is stored in a management device with respect to the input user account and selecting whether to conduct synchronization. FIG. 9 illustrates that the second device is configured as a set-back box so that the message 961 and user interfaces of FIG. 10 are displayed on the display unit of the display apparatus as the first device 910. Alternatively, when the second device includes a display unit, such as a tablet PC, the message 961 may be displayed on the display unit of a second device. A user selects either a yes icon 962 or a no icon 963 of the message 961, thereby determining whether to conduct synchronization.

When the user selects the yes icon 962, the second device requests synchronization with the first device 910 to the management server.

In response to the synchronization request, the management server attempts to conduct synchronization between devices, that is, the first and second devices, and generates a second application list by excluding an application not supported by the second device from the first application list. The generated second application list may be stored in the management server in connection with the first application list.

The management server returns to a result of generation of the second application list to the second device.

The second device requests the generated second application list from the management server, and the management server returns the second application list to the second device in response to the request (response application list of Device 2).

The second device conducts synchronization with the received second application list.

Here, the second device may compare an actually installed application with the second application list and download and install an application from the market server, thereby achieving synchronization. Installing an application includes updating an application to a latest version.

When the application is completely installed, as shown in FIG. 10, a second device may control to display a message 1064 as a user interface indicating that the installation of the application has been completed. Likewise in FIG. 9, the message 1064 of FIG. 10 may be also displayed on the display unit of the second device. Here, the second device may further display a message 1065 showing an installation result of each application.

As shown in FIG. 10, the message 1065 may include an icon 1066 indicating whether installation of each application has been successfully completed or has failed, an icon 1067 indicating whether an installed application is a pre-installed application or a user installed application, an icon 1068 indicating a reason for failure of installation, or the like. Accordingly, a user is informed that Application 3 has been excluded from an installation list since Application 3 is in the first application list but is not supported by the second device.

Regardless of synchronization, the second device may install at least one user installed application based on a user selection or update an already installed application. A list of the user installed application is transmitted to the management server, or the management server is notified of the list. Here, notification may be carried out when the user installed application is installed or by communications between the second device and the management server performed periodically.

The management server updates the existing second application list to add an application included in the user installed application list received from the second device. According to this process, the management server may maintain information about latest application installation in the devices managed by the management server.

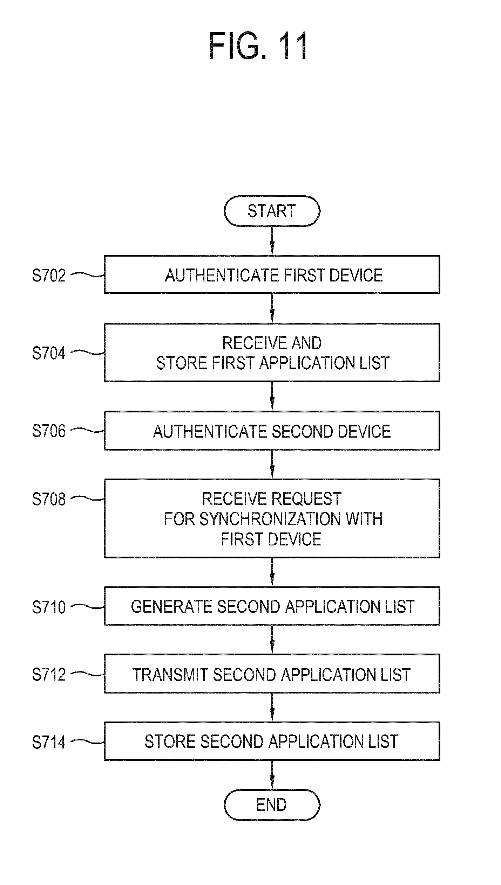

Hereinafter, an application synchronization method according to an exemplary embodiment will be described with reference to FIGS. 11 to 13.

FIG. 11 is a flowchart illustrating an application synchronization method of the management server 300 according to an exemplary embodiment.

As shown in FIG. 11, a management server authenticates a first device requesting connection (S702). Here, when the first device is connected to the management server for the first time, the management server may register information about the first device in a third storage unit or update already registered information.

The management server may receive and store a first application list of an application installed in the first device from the authenticated first device (S704). Here, the first application list includes a pre-installed application basically installed in the first device and a user installed application selected by a user. Further, when there is an application list of the first device already stored in the management server, the management server may compare the first application list with the already stored application list and update the already stored application list to the received first application list based on a comparison result.

The management server may receive a connection request from a second device, different from the first device, and authenticate the second device (S706). Here, the first device and the second device may be authenticated based on the same user information.

Next, the management server may receive a request for application synchronization with the first device from the authenticated second device (S708).

The management server determines whether the second device supports an application included in the first application list and generates a second application list by excluding an application not supported by the second device from the first application list (S710).

Here, the management server may verify version information about an application included in the second application list, thereby generating the second application list to include a latest version of an application. The management server may determine whether the second device supports the latest version of the application so that the second application list includes an application in a version supported by the second device.

Further, the management server may determine a recommended application for the second device so that the recommended application is included in the second application list. Here, the recommended application may be determined based on at least one of rankings of applications downloaded to the same model of devices as the second device, records of application installation by a user of the second device, and information about popular applications in the same category.

The management server transmits the generated second application list to the second device (S712).

Then, the management server stores the generated second application list (S714).

The management server manages applications installed in the first device and the second device using the stored first and second applications lists.

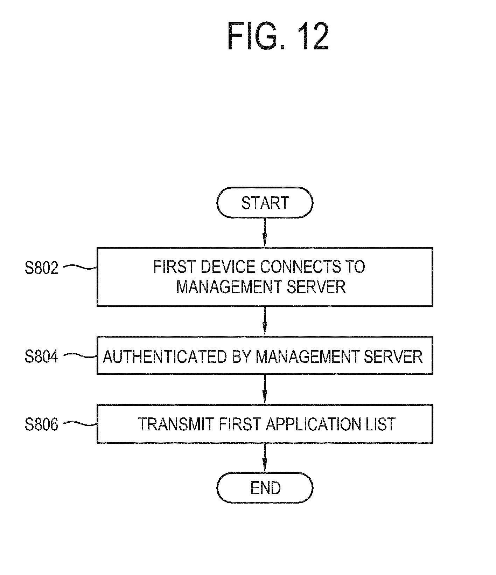

FIG. 12 is a flowchart illustrating an application synchronization method of a first device according to an exemplary embodiment.

As shown in FIG. 12, the first device connects to a management server via a cable or wirelessly (S802).

The connected first device is authenticated by the management server (S804).

The authenticated first device transmits a first application list of an application installed in the first device to the management server (S806). Here, the first application list includes a pre-installed application basically installed in the first device and a user installed application selected by a user.

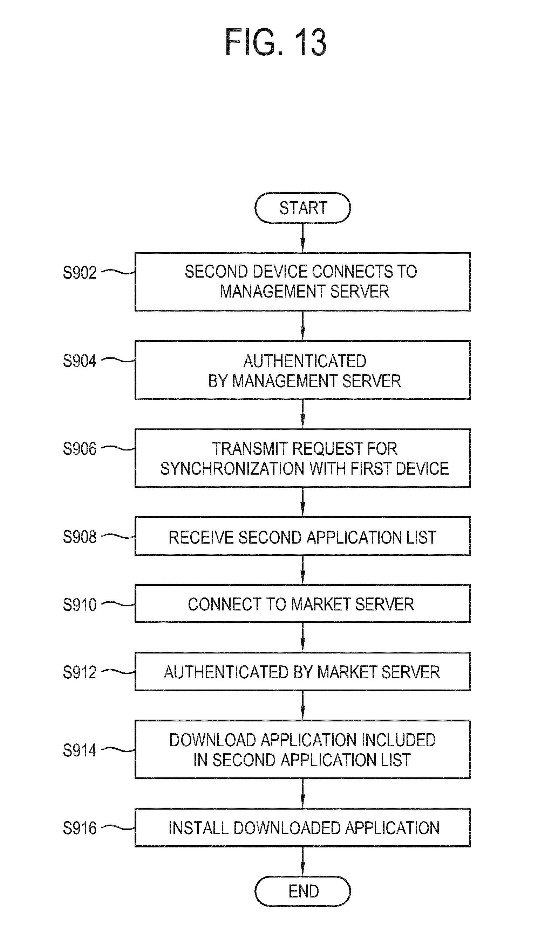

FIG. 13 is a flowchart illustrating an application synchronization method of a second device according to an exemplary embodiment.

As shown in FIG. 13, the second device connects to a management server via a cable or wirelessly (S902).

The connected second device is authenticated by the management server (S904).

The authenticated second device transmits a request for application synchronization with a first device to the management server (S906).

In response to the request in S906, the second device receives a second application list from the management server (S908). Here, the second application list is obtained by excluding an application not supported by the second device from the first application list transmitted in S806 of FIG. 12 and includes a pre-installed application, a user installed application, and a recommended application, which are a latest version of applications supported by the second device. The recommended application may be determined based on at least one of rankings of applications downloaded to the same model of devices as the second device, records of application installation by a user of the second device, and information about popular applications in the same category.

The second device connects to a market server, that is, an application market (S910).

The connected second device is authenticated by the market server (S912).

The second device downloads an application included in the second application list from the market server (S914).

The downloaded application is installed in the second device (S916). Then, the applications installed in the first device and the second device are synchronized.

As described above, according to exemplary embodiments, in application synchronization between devices, a supportable application is selectively synchronized based on whether a target device supports the application, thereby preventing an unsupported application from unnecessarily wasting capacity and reducing user inconvenience. Further, a target device has a latest version of an application installed and is also provided with a recommended application, thereby enhancing user convenience.

Furthermore, according to exemplary embodiments, when a user connects a TV with a set-back box to upgrade the device or when the TV is replaced because of a flaw, an application used in the existing TV is automatically installed in a substitute device based on whether the substitute device supports the application, thereby enabling the user to use the application.

Although a few exemplary embodiments have been shown and described, it will be appreciated by those skilled in the art that changes may be made in these exemplary embodiments without departing from the principles of the invention, the scope of which is defined in the appended claims and their equivalents.

## Claims

1. A method for application synchronization by a management server capable of communicating with a plurality of devices, the method comprising:
receiving, from a first device, a first application list of at least one application installed in the first device at the management server;
storing the first application list in the management server;
receiving, from a second device, a request for application synchronization with the first device;
determining whether the second device supports an application from the first application list;
generating a second application list by excluding the application from the first application list in response to the application not being supported by the second device, and including the application in response to the application being supported by the second device; and
transmitting the second application list to the second device.

2. The method of claim 1, further comprising authenticating the first device and authenticating the second device, wherein the first device and the second device are authenticated based on a same user information.

3. The method of claim 1 or 2, wherein the first application list comprises:
a pre-installed application installed in the first device; and
a user installed application selectively installed by a user in the first device.

4. The method of any one of claims 1 to 3, wherein the storing the first application list comprises:
comparing the first application list with an already stored application list of the first device; and
updating the already stored application list of the first device to the first application list based on a comparison result.

5. The method of any one of claims 1 to 4, further comprising:
determining whether the first device or the second device is first connected to the management server; and
registering information about the first device, the second device, or updating already registered information based on a determination result.

6. The method of any one of claims 1 to 5, wherein the generating the second application list comprises:
verifying version information about an application comprised in the second application list; and
generating the second application list to comprise a latest version of an application based on a verification result.

7. The method of any one of claims 1 to 6, further comprising:
determining a recommended application for the second device,
wherein the recommended application is comprised in the second application list.

8. A method for application synchronization by a second device capable of communicating with a management server which stores a first application list of at least one application installed in a first device, the method comprising:
transmitting, from the second device, a request to the management server for application synchronization with the first device;
receiving, at the second device, a second application list from the management server, wherein the second application list is generated by excluding an application not supported by the second device from the first application list; and
installing, in the second device, an application comprised in the second application list.

9. The method of claim 8, further comprising:
connecting to an application market from the second device; and
receiving, at the second device, an application comprised in the second application list from the application market.

10. The method of claim 8 or 9, wherein the second application list comprises:
a pre-installed application installed in the second device; and
a user installed application selectively installed by a user of the first device.

11. The method of any one of claims 8 to 10, wherein the second application list comprises:
a latest version of an application, wherein the latest version of the application is supported by the second device.

12. A management server capable of communicating with a plurality of devices, the management server comprising:
a communication unit configured to receive, from a first device, a first application list comprising an application installed in a first device;
a storage unit configured to store the first application list; and
a controller configured to:
determine whether a second device supports the application comprised in the first application list;
generate a second application list by excluding the application from the first application list in response to the application not being supported by the second device, and including the application in response to the application being supported by the second device; and
control the communication unit to transmit the second application list to the second device in response to a request for application synchronization with the first device being received from the second device through the communication unit.

13. The management server of claim 12, further comprising:
an authentication manager configured to authenticate the first device and the second device,
wherein the first device and the second device are authenticated based on a same user information.

14. The management server of claim 12, wherein the first application list comprises:
a pre-installed application installed in the first device; and
a user installed application selectively installed by a user in the first device.

15. A device capable of communicating with a management server arranged to store a list of an application installed in at least one device, the device comprising:
a communication unit configured to communicate with the management server and transmit a request for application synchronization with a predetermined device to the management server; and
a controller configured to:
control the communication unit to receive a second application list from the management server; and
install an application comprised in the second application list,
wherein the second application list is generated by excluding an unsupported application from applications comprised in a first application list of the predetermined device associated with the request for application synchronization.
